# FASCICULE DE BREVET EUROPEEN

(11) **EP 0 613 734 B1**
(45) Date de publication et mention de la délivrance du brevet: **26.11.1997**
(21) Numéro de dépôt: 94400421.7
(22) Date de dépôt: 28.02.1994
(51) Int. Cl.: B08B 3/10, G02B 6/38

(54) **Procédé pour le dégraissage d'un câble à fibres optiques**
Verfahren zum Entfetten eines optischen Kabels
Method for degreasing an optical fibre cable

(30) Priorité: 05.03.1993 FR 9302606
(43) Date de publication de la demande: 07.09.1994
(73) Titulaire: FRANCE TELECOM, 75015 Paris (FR)
(72) Inventeur: Caudrelier, Jacques, F-45190 Villorgeau (FR)
(74) Mandataire: Armengaud Ainé, Alain

(56) Documents cités:
- EP-A- 0 170 274
- EP-A- 0 289 875
- CH-A- 679 019
- SOVIET PATENTS ABSTRACTS Section PQ, Week 9318, Derwent Publications Ltd., London, GB; Class P, AN 93-150130 & SU-A-1 733 127 (N CAUCASUS MACH TRACTOR DEPOT)
- PATENT ABSTRACTS OF JAPAN vol. 10, no. 156 (C-351) (2212) 5 Juin 1986 & JP-A-61 009 585 (TOUSHIBA) 17 Janvier 1986

## Description

La présente invention est relative à un procédé permettant de réaliser de façon rapide et efficace le nettoyage de fibres optiques, en particulier leur dégraissage, sans risque notamment de briser ces fibres par suite d'efforts incontrôlés exercés sur elles lors de cette opération.

On sait qu'une des conditions nécessaires à la réalisation d'épissures appropriées au raccordement entre deux fibres optiques, lors du câblage d'un réseau de transmission de signaux par exemple, exige que ces fibres soient parfaitement propres et en particulier débarrassées de toute trace de graisse. Or, les câbles à fibres optiques, notamment les câbles dits monomodes sont remplis, entre leur gaine externe et les fibres parallèles ou voisines qu'elle entoure, d'un isolant qui est généralement un produit lubrifiant du genre d'un gel de pétrole ou d'un autre produit analogue, assimilable ou même constitué par une graisse synthétique qui imprègne la surface externe de ces fibres. Lorsque le câble est dénudé sur une fraction de son extrémité pour réaliser une épissure entre une au moins de ses fibres et une fibre homologue d'un câble voisin, il faut donc que ces fibres soient débarrassées de la graisse qui entoure leurs parties terminales, voire la gaine externe du câble, lorsque celle-ci a été mise en place dans une conduite généralement enterrée, dans laquelle le cas échéant le câble a été introduit au moyen d'une méthode selon laquelle le tirage de ce câble, selon la longueur de la conduite, s'effectue en injectant simultanément dans celle-ci un lubrifiant approprié.

Les méthodes les plus généralement utilisées pour dégraisser un câble à fibres optiques, consistent à soumettre celui-ci à un traitement aux ultra-sons à l'intérieur d'un bac ou d'une cuve dans laquelle le câble ou au moins la partie de celui-ci à dégraisser, est préalablement plongé. Mais cette technique n'est pas entièrement satisfaisante.

En effet, le bac à ultra-sons est habituellement un appareil de laboratoire qui se révèle tout à fait inadapté à un usage sur chantiers, en raison de sa fragilité et des dimensions en général trop faibles de ce bac, ne permettant pas d'y plonger la totalité du câble ou au minimum des parties de celui-ci à nettoyer. De plus, avec un tel appareil, il est nécessaire de vider systématiquement la cuve avant chaque déplacement de l'appareil d'un chantier à un autre, préalablement à un nouveau remplissage de celle-ci, ce qui exige des réglages qui sont à reprendre avant chaque nouvel usage, ces réglages étant longs et nécessitant un personnel relativement spécialisé. C'est pourquoi le plus souvent, les monteurs ne réalisent pas un tel nettoyage aux ultra-sons mais se bornent à un simple dégraissage à la main, ce qui implique de nombreux risques de casse ou de rupture des fibres optiques du câble, surtout si ce dernier comporte un nombre élevé de fibres voisines, de l'ordre de 20 à 30, avec en outre une qualité médiocre des épissures réalisées.

Même avec un bac à ultra-sons, les résultats obtenus ne sont guère probants, ce qui nécessite souvent d'accroître la durée du nettoyage. Mais le phénomène de cavitation au sein du liquide contenu dans le bac ou la cuve qui apparaît alors, provoque fréquemment l'apparition de micro-bulles qui se logent parfois entre la graisse et les fibres, en réalisant le décollement de cette graisse, non seulement à l'extrémité des fibres où on souhaite effectuer l'épissure, mais à l'intérieur de la gaine elle-même, ce qui peut détériorer gravement les fibres et perturber leur positionnement relatif régulier à l'intérieur de la gaine.

Enfin, les bacs à ultra-sons nécessitent un dispositif d'alimentation électrique et de régulation précise, fonctionnant généralement sous 220 volts, ce qui n'est guère pratique sur un chantier et présente des dangers, une alimentation à faible tension, de l'ordre de 12 volts, étant largement préférable.

On connaît en outre, par CH-A-679 019, un appareil de nettoyage comportant une cuve renfermant un solvant liquide, et pourvue en partie inférieure d'une tuyauterie d'admission d'air sous pression et des moyens permettant de réaliser une émulsion d'air et de liquide par brassage, la mousse formée se recueillant au-dessus du niveau du solvant liquide.

L'invention concerne un procédé de nettoyage de fibres optiques, qui évite le recours aux ultra-sons, donc aux appareils de laboratoire complexes utilisés pour produire et contrôler ces derniers, et pallie ainsi aux inconvénients de cette méthode classique.

Le procédé selon l'invention découle notamment de l'observation selon laquelle les composés chimiques ont tendance à réagir entre eux plus rapidement et plus efficacement quand la surface de contact des produits réactifs augmente. Dans le cas plus particulièrement considéré, où il s'agit d'éliminer un dépôt de graisse sur la surface d'une fibre optique à l'extrémité dénudée d'un câble, le solvant utilisé est du pétrole, qui dissout les graisses rencontrées. La surface de la fibre étant finie, on augmente donc la surface active du pétrole, en utilisant celui-ci, non plus sous la forme d'un liquide, mais sous celle d'un produit moussant. Les fibres plongées dans ladite mousse sont alors très rapidement nettoyées, la graisse qui les recouvre étant éliminée sous la forme d'une émulsion de manière beaucoup plus complète et efficace, par mélange intime avec le solvant lui-même émulsionné.

Selon l'invention, le procédé considéré pour le nettoyage et en particulier le dégraissage de fibres optiques émergeant de l'extrémité dénudée de la gaine d'un câble, entourant notamment une pluralité de telles fibres protégées par un matériau à base de graisse ou analogue, se caractérise en ce qu'il consiste à utiliser un solvant liquide appliqué sur la surface externe de la fibre sous la forme d'une mousse, constituée d'un mélange de solvant et d'air, augmentant la surface de contact de la fibre et du solvant.

De préférence, le solvant utilisé est de façon en elle-même connue un produit à base de pétrole ou d'un dérivé de ce dernier ; en variante, ce solvant peut être un produit chimique liquide, réputé pour ses propriétés dégraissantes, tel que du trichloréthylène.

Selon une caractéristique particulière du procédé considéré, le solvant liquide est finement divisé et émulsionné par injection en continu d'un débit d'air sous pression délivré au sein du liquide, la mousse formée se disposant au-dessus du niveau de ce liquide.

De préférence, on plonge les fibres à dégraisser dans la mousse, au-dessus du niveau liquide, l'injection d'air provoquant un brassage continu de cette mousse au contact des fibres.

Avantageusement enfin, on procède dans une étape finale à un essuyage des fibres nettoyées, pour éliminer la mousse en excès subsistant sur la surface des fibres.

D'autres caractéristiques de l'invention apparaîtront encore à travers la description qui suit d'un exemple de réalisation d'un appareil pour la mise en oeuvre de l'invention, donné à titre indicatif et non limitatif, en référence au dessin annexé sur lequel :
- La Figure 1 est une vue schématique en élévation et en coupe de cet appareil, rempli d'un solvant approprié, mais préalablement à la création d'une émulsion au sein de ce dernier.
- La Figure 2 est une vue identique de l'appareil selon la Figure 1, mais dans lequel le solvant est émulsionné par un débit d'air approprié de manière à permettre le nettoyage des extrémités dénudées d'un câble à fibres optiques.

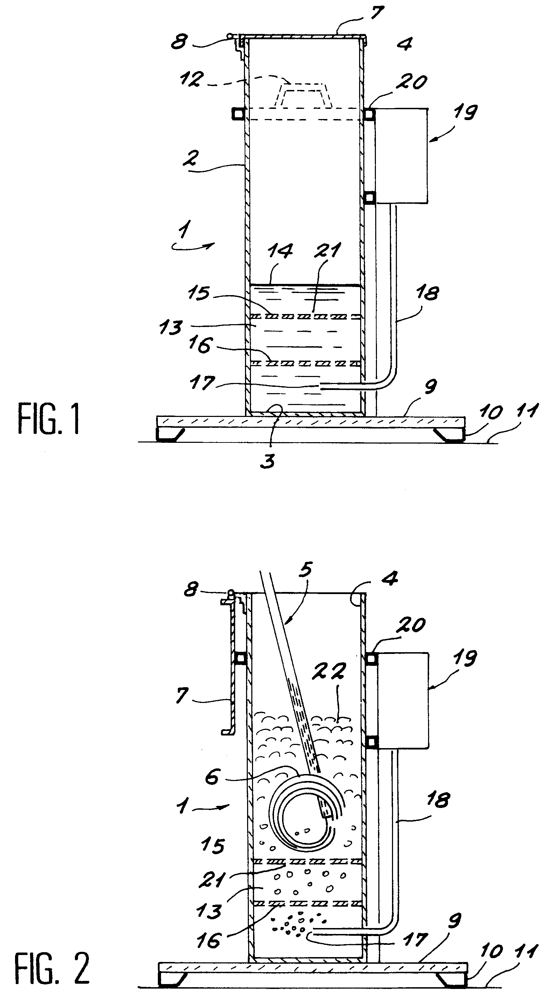

Sur ces Figures, la référence 1 désigne la cuve de l'appareil de nettoyage pour la mise en oeuvre du procédé selon l'invention, dont la paroi latérale 2 est fermée à son extrémité inférieure par un fond 3 et est normalement ouverte à son extrémité supérieure 4 afin de permettre l'introduction dans la cuve d'un câble 5 à fibres optiques 6, ces dernières étant groupées à l'intérieur de la gaine de ce câble et convenablement dénudées (Figure 2) sur une longueur suffisante afin de permettre la réalisation ultérieure d'épissures de raccordement avec les fibres homologues d'un autre câble (non représenté), l'extrémité supérieure 4 de la cuve pouvant être fermée par un couvercle 7 monté pivotant autour d'une articulation 8 prévue sur le côté de la paroi 2.

La cuve 1 repose sur un plateau de support 9 muni de pieds d'appui 10 sur le sol 11. Elle comporte par ailleurs dans sa paroi 2, vers l'extérieur de la cuve, des poignées 12 permettant d'en assurer la manipulation.

L'intérieur de la cuve est partiellement rempli au moyen d'un solvant liquide 13, choisi en fonction de ses propriétés dégraissantes, notamment constituées par du pétrole ou un produit analogue, par exemple du trichloréthylène ou un composé incorporant celui-ci. Le niveau supérieur 14 du solvant liquide 13 dans la cuve 1 s'élève à une hauteur déterminée, très en dessous du bord de la paroi 2 de cette cuve à son extrémité supérieure 4, environ au tiers de la hauteur de cette cuve. En outre et conformément au dispositif permettant la mise en oeuvre du procédé objet de l'invention, la paroi 2 est associée à des plateaux perforés transversaux tels que 15 et 16, parallèles l'un à l'autre et s'étendant horizontalement sous le niveau 14 en étant séparés l'un de l'autre par une distance déterminée.

Sous le plateau inférieur 16, débouche par son orifice de sortie 17 une tuyauterie 18 qui est raccordée à son extrémité opposée, à l'extérieur de la cuve à un compresseur 19 de faible puissance et qui, dans l'exemple considéré, est monté et solidarisé de la paroi 2 à l'extérieur de celle-ci, à l'aide de plots de fixation 20.

En fonctionnement, la cuve 1 étant remplie d'un solvant 13 dans les conditions précitées, le compresseur 19 est commandé de telle sorte qu'il délivre dans le solvant liquide à l'intérieur de la cuve par l'intermédiaire de la tuyauterie 18, un débit d'air suffisant pour créer au sein de ce liquide une agitation suffisante et permettre à l'air qui remonte au-delà des plateaux 15 et 16 en traversant ces derniers par une multitude de trous de faible diamètre 21, ménagés selon la surface de ces plateaux, de créer une émulsion avec le solvant et de produire au-dessus des plateaux un volume de mousse 22 qui s'élève dans la cuve 1 très notablement au-dessus du niveau 14 du liquide au repos, par exemple jusqu'aux deux tiers au moins de la hauteur de la cuve.

Le câble 5 avec ses fibres optiques 6 convenablement dénudées à son extrémité est alors plongé dans la cuve après ouverture du couvercle 7, de telle sorte que les fibres soient en contact permanent et continuellemement renouvelé avec la mousse 22, qui réalise un dégraissage complet et efficace de ces fibres, sans risque de créer sur ces dernières des efforts de flexion et de les rompre.

Une fois les fibres 6 ainsi dégraissées, le câble 5 peut être aisément sorti de la cuve 1 et le cas échéant subir un essuyage final avec un papier sec qui retire les ultimes et éventuelles traces de graisse restantes ainsi que le dépôt de solvant sur la surface de ces fibres.

Dans un mode de réalisation préféré du dispositif permettant la mise en oeuvre du procédé objet de l'invention, la cuve comporte un diamètre d'environ 125 mm pour une hauteur de l'ordre de 600 mm, le volume de solvant liquide dans la cuve étant d'environ 1,5 l. Le compresseur est entraîné par un bloc moteur (non représenté) fonctionnant sous une tension de 12 volts, mais qui pourrait également être utilisé avec une alimentation délivrant du courant sous 220 volts, avec un convertisseur réalisant l'abaissement de tension souhaité.

Le dégraissage obtenu est particulièrement complet et soigné, les fibres étant débarrassées de toutes traces de graisse ou autres, en particulier pour des câbles monomode où ces fibres sont généralement entourées à l'intérieur de leur gaine commune par un lubrifiant qui remplit cette gaine autour des fibres et rend impossible la réalisation en l'état d'une épissure de connexion satisfaisante.

## Revendications

1. Procédé pour le nettoyage et en particulier le dégraissage de fibres optiques (6) émergeant de l'extrémité dénudée de la gaine d'un câble (5), entourant notamment une pluralité de telles fibres protégées par un matériau à base de graisse ou analogue, caractérisé en ce qu'il consiste à utiliser un solvant liquide (13) appliqué sur la surface externe de la fibre sous la forme d'une mousse, constituée d'un mélange de solvant et d'air, augmentant la surface de contact de la fibre et du solvant.

2. Procédé selon la revendication 1, caractérisé en ce que le solvant utilisé est de façon en elle-même connue un produit à base de pétrole ou d'un dérivé de ce dernier.

3. Procédé selon la revendication 1, caractérisé en ce que le solvant est un produit chimique liquide, à propriétés dégraissantes, tel que du trichloréthylène.

4. Procédé selon l'une quelconque des revendications 1 à 3, caractérisé en ce que le solvant liquide est finement divisé et émulsionné par injection en continu d'un débit d'air sous pression délivré au sein du liquide, la mousse formée se disposant au-dessus du niveau de ce liquide.

5. Procédé selon l'une quelconque des revendications 1 à 4, caractérisé en ce qu'on plonge les fibres à dégraisser dans la mousse, au-dessus du niveau liquide, l'injection d'air provoquant un brassage continu de cette mousse au contact des fibres.

6. Procédé selon l'une quelconque des revendications 1 à 5, caractérisé en ce qu'on procède dans une étape finale à un essuyage des fibres nettoyées, pour éliminer la mousse en excès subsistant sur la surface des fibres.

## Claims

1. Method for the cleaning and, in particular, the degreasing of optical fibres (6) emerging from the end of a cable (5) stripped of the sheath, the sheath surrounding, notably, a plurality of such fibres protected by a grease-based or analogous material, characterized in that it consists of using a liquid solvent (13) applied onto the outer surface of the fibre in the form of a lather, constituted of a mixture of solvent and air, increasing the contact surface of the fibre and of the solvent.

2. Method according to claim 1, characterized in that the solvent used is, in known manner, a product based upon petroleum or a derivative of the latter.

3. Method according to claim 1, characterized in that the solvent is a liquid chemical product having degreasing properties, such as trichloroethylene.

4. Method according to any one of claims 1 to 3, characterized in that the liquid solvent is finely divided and emulsified by continuous injection of a pressurized air flow supplied into the body of the liquid, the lather formed being disposed above the level of this liquid.

5. Method according to any one of claims 1 to 4, characterized in that the fibres to be degreased are dipped into the lather, above the liquid level, the air injection causing a continuous stirring of this lather in contact with the fibres.

6. Method according to any one of claims 1 to 5, characterized in that a final step is carried out comprising a drying of the cleaned fibres for the purpose of removing the excess lather remaining on the surface of the fibres.

## Patentansprüche

1. Verfahren zum Reinigen und besonders Entfetten von optischen Fasern (6), die aus dem abgemantelten Ende eines Kabels (5) austreten, das besonders eine Mehrzahl solcher Fasern umgibt, die von einem Material auf der Grundlage von Fett oder dergleichen geschützt sind, **dadurch gekennzeichnet, daß** daß es darin besteht, ein auf die Oberfläche der Faser in Form eines Schaums aufgebrachtes flüssiges Lösungsmittel (13) zu verwenden, wobei der Schaum aus einem Gemisch von Lösungsmittel und Luft besteht, das die Kontaktfläche zwischen der Faser und dem Lösungsmittel vergrößert.

2. Verfahren nach Anspruch 1, **dadurch gekennzeichnet, daß** das verwendete Lösungsmittel an sich bekannt und ein Produkt auf der Grundlage von Petroleum oder einem Derivat desselben ist.

3. Verfahren nach Anspruch 1, **dadurch gekennzeichnet, daß** das Lösungsmittel ein flüssiges chemisches Produkt mit entfettenden Eigenschaften, wie Trichlorethylen ist.

4. Verfahren nach einem der Ansprüche 1 bis 3, **dadurch gekennzeichnet, daß** das flüssige Lösungsmittel durch kontinuierliche Einleitung eines Druckluftstroms in den Bereich der Flüssigkeit fein verteilt und emulgiert wird, wobei sich der gebildete Schaum oberhalb des Niveaus dieser Flüssigkeit befindet.

5. Verfahren nach einem der Ansprüche 1 bis 4, **dadurch gekennzeichnet, daß** man die zu entfettenden Fasern in den Schaum oberhalb des Flüssigkeitsniveaus eintaucht, wobei das Einblasen von Luft ein kontinuierliches Rühren dieses Schaums in Berührung mit den Fasern bewirkt.

6. Verfahren nach einem der Ansprüche 1 bis 5, **dadurch gekennzeichnet, daß** man in einer Endstufe ein Trockenwischen der gereinigten Fasern vornimmt, um den an der Oberfläche der Fasern verbliebenen überschüssigen Schaum zu beseitigen.
